Europäisches Patentamt

European Patent Office

Office européen des brevets

(11) Veröffentlichungsnummer: **0 367 043 B1**

# EUROPÄISCHE PATENTSCHRIFT

(12)

(45) Veröffentlichungstag der Patentschrift: **23.12.92**

(21) Anmeldenummer: **89119491.2**

(22) Anmeldetag: **20.10.89**

(51) Int. Cl.⁵: **E03C 1/10**

(54) **Sanitärarmatur mit Rohrunterbrecher.**

(30) Priorität: **31.10.88 DE 3837032**

(43) Veröffentlichungstag der Anmeldung:
**09.05.90 Patentblatt 90/19**

(45) Bekanntmachung des Hinweises auf die
Patenterteilung:
**23.12.92 Patentblatt 92/52**

(84) Benannte Vertragsstaaten:
**AT CH ES FR GB IT LI NL SE**

(56) Entgegenhaltungen:
**DE-A- 3 706 737**
**DE-B- 1 205 352**
**US-A- 2 302 150**
**US-A- 2 877 789**
**US-A- 3 814 124**

(73) Patentinhaber: **HANSA METALLWERKE AG**
**Sigmaringer Strasse 107**
**W-7000 Stuttgart 81(DE)**

(72) Erfinder: **Oberdörfer, Hans**
**Kolbäckerstrasse 16**
**W-7000 Stuttgart 80(DE)**

(74) Vertreter: **Ostertag, Reinhard et al**
**Patentanwälte Dr. Ulrich Ostertag Dr. Rein-**
**hard Ostertag Eibenweg 10**
**W-7000 Stuttgart 70(DE)**

**Beschreibung**

Die Erfindung betrifft eine Sanitärarmatur, in welche ein Rohrunterbrecher eingebaut ist, mit

a) einem Armaturenkörper;

b) einer Kammer innerhalb des Armaturenkörpers, in welche einmünden:

ba) ein Zulaufkanal für Wasser;

bb) ein Ablaufkanal für Wasser;

bc) ein Belüftungsweg;

c) einer Schließklappe in der Kammer, welche bei Unterdruck um einen bestimmten Winkel aus einer ersten Stellung, in welcher sie den Belüftungsweg verschließt, in eine zweite Stellung, in welcher sie den Zulaufkanal verschließt und den Belüftungsweg öffnet, verschwenkt.

Bekanntlich gibt es Sanitärarmaturen, die bei Rücksaugung von Schmutzwasser die Qualität des Trinkwassers gefährden können. Hierzu gehören insbesondere Wannen/Brausebatterien mit Schlauchbrause oder Waschtisch- und Spültischarmaturen mit ausziehbarer Schlauchbrause. Derartige Armaturen müssen Sicherungseinrichtungen aufweisen, mit denen zuverlässig die Rücksaugung von verschmutztem Wasser in das Trinkwasser verhindert werden kann. Diese Sicherungseinrichtungen umfassen regelmäßig einen Rohrunterbrecher oder -belüfter.

Eine Sanitärarmatur der eingangs genannten Art ist aus der US-A-28 77 789 bekannt. Der hier eingebaute Rohrunterbrecher weist eine massive Schließklappe auf, die mittels eines Zapfens oder Stiftes in der Kammer aufgehängt ist. Durch Gewichte wird Sorge dafür getragen, daß normalerweise weder der Wasserventilsitz noch der Luftventilsitz verschlossen ist. Die Schließklappe wird erst durch fließendes Wasser gegen den Luftventilsitz gedrückt; dies setzt eine bestimmte Geometrie des Wasserweges innerhalb des Rohrunterbrechers ebenso wie eine bestimmte Formgebung an der Schließklappe selbst voraus. Die verhältnismäßig große Masse der Schließklappe mit dem ihr zugeordneten Ausgleichsgewicht bedeutet eine erhebliche Trägheit, welche das Ansprechverhalten beim Auftreten eines Unterdruckes im angeschlossenen Hausleitungssystem verlangsamt. Damit diese Trägheit nicht allzu sehr ins Gewicht fällt, werden durch eine Keilform der Schließklappe, die wiederum das Gewicht vergrößert, die Bewegungswege möglichst kurz gehalten. Dies bedeutet allerdings verhältnismäßig schmale Spalte, sowohl für das Wasser als auch für die eintretende Luft, wodurch der Wasserdurchfluß gedrosselt und das Ansprechverhalten weiter verlangsamt wird. Außerdem benötigt die Bauweise erheblichen Platz.

Auch die US-A-23 02 150 beschreibt eine Sanitärarmatur der eingangs genannten Art. Der hier eingesetzte Rohrunterbrecher verwendet ebenfalls eine massive Schließklappe aus starrem Material, welche an einem Rand so verschwenkbar aufgehängt ist, daß sie pendeln kann. Ohne Einwirkung äußerer Kräfte steht diese Schließklappe praktisch senkrecht und gibt dabei sowohl den Zulaufkanal für Wasser als auch den Belüftungsweg frei. Erst unter dem Einfluß des strömenden Wassers soll sie sich gegen die Mündungsstelle des Belüftungsweges anlegen und diesen dabei verschließen. Ähnlich wie beim Gegenstand der oben erwähnten US-A-28 77 789 reagiert diese Schließklappe nur sehr träge auf Veränderungen des Druckes im Zulaufkanal.

Aufgabe der vorliegenden Erfindung ist es, eine Sanitärarmatur der eingangs genannten Art dahingehend zu verbessern, daß der Platzbedarf für den Rohrunterbrecher klein und dessen Ansprechempfindlichkeit erhöht ist.

Diese Aufgabe wird erfindungsgemäß dadurch gelöst, daß

d) die Schließklappe mittels eines einstückig an sie angeformten, elastischen Befestigungsabschnittes an dem Armaturenkörper festgelegt ist;

e) die Schließklappe um eine Übergangslinie zwischen ihr und dem Befestigungsabschnitt verschwenkbar ist;

f) die Schließklappe ohne Unterdruck im Zulaufkanal elastisch federnd an der Mündungsöffnung des Belüftungsweges in die Kammer anliegt.

Erfindungsgemäß sind also Befestigungsabschnitt und Schließabschnitt einstückige Teile der Schließklappe des Rohrunterbrechers und über eine Übergangslinie aus elastischem Material miteinander verbunden. Nach dem Festlegen des Befestigungsabschnittes in der Kammer, z.B. durch Verklemmen, liegt der Schließabschnitt unter geringfügigem elastischem Druck an der Mündungsstelle des Belüftungsweges an. Die Masse des beweglichen Teiles der Schließklappe, nämlich des Schließabschnittes, kann so sehr klein gehalten werden, da die Kraft, welche den Belüftungsweg verschließt, weder vom fließenden Wasser über eine besondere Formgebung der Schließklappe noch von einer Gewichtskraft herrührt. Die bei der Erfindung statt dessen eingesetzte elastische Kraft kann durch geeignete Wahl der verwendeten Materialien sowie Materialstärken exakt definiert werden. Auf diese Weise ist es möglich, bereits bei sehr niedrigen Unterdrucken in dem angeschlossenen Hausleitungssystem eine Art "Klappwirkung" zu erzielen, bei welcher der Schließabschnitt die Mündungsstelle des Belüftungsweges vollständig freigibt und den Zulaufkanal für Wasser vollständig verschließt. Dabei lassen sich große Schwenkwinkel erzielen. Deswegen und weil der Schließabschnitt selbst eben und sehr flach ausgestaltet sein kann, sind die Strömungswege sowohl für Wasser als auch für Luft groß, was zu geringen Drosselverlusten und damit ebenfalls zu höherer Ansprechgeschwindigkeit des Rohrunterbrechers führt.

Das definierte "Umklappen" des Schließabschnittes zwischen den beiden Stellungen läßt sich durch die im Anspruch 2 beschriebene Hohlkehle zwischen Befestigungsabschnitt und Schließabschnitt noch verbessern. Außerdem ist die Achse, um welche die Schwenkbewegung des Schließabschnittes stattfinden soll, präzise definiert; die Schwenkbewegung selbst ist erleichtert.

Bei der Ausgestaltung der Erfindung nach Anspruch 3 besorgen die elastischen Auflagen die Abdichtung.

Bei der Ausgestaltung der Erfindung nach Anspruch 4 dagegen übernehmen dies die elastischen Dichtungen, welche die Mündungsstellen des Belüftungsweges und des Zulaufkanales in die Kammer umgeben.

Ausführungsbeispiele der Erfindung werden nachfolgend anhand der Zeichnung näher erläutert; es zeigen

|  |  |
|---|---|
| Figur 1: | die Seitenansicht einer Sanitärarmatur mit eingebautem Rohrunterbrecher, teilweise im Schnitt; |
| Figur 2a: | die Seitenansicht der Schließklappe im Rohrunterbrecher von Figur 1; |
| Figur 2B: | die Unteransicht der Schließklappe des Rohrunterbrechers von Figur 1; |
| Figur 3: | eine zweite Ausführungsform eines Rohrunterbrechers zum Einbau in die in Figur 1 dargestellte Sanitärarmatur. |

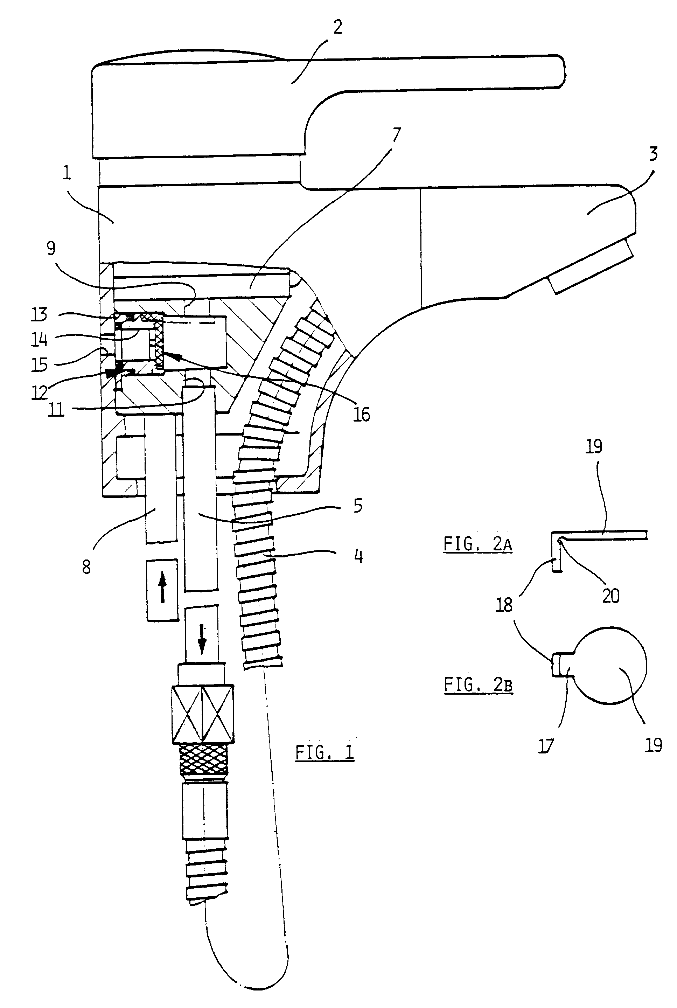

Die in Figur 1 dargestellte Sanitärarmatur umfaßt in bekannter Weise einen Armaturenkörper 1, einen verdreh- und verschwenkbaren Bedienungshebel 2 sowie ein ausziehbares Auslauf-Mundstück 3. Letzteres ist über einen in eine Schleife gelegten Brauseschlauch 4, der teilweise innerhalb des Armaturenkörpers 1 und teilweise durch das Loch des unterhalb der Sanitärarmatur zu denkenden Waschtisches geführt ist, mit einem Auslaufrohr 5 verbunden. Das Auslaufrohr 5 ist in einem Bodenteil 6 befestigt, welches auf einer inneren Stufe des Armaturenkörpers 1 aufruht. Das Bodenteil 6 trägt eine Steuerkartusche 7, welche in bekannter Weise aufgebaut sein kann und in der die zur Steuerung des Wasserstromes bzw. der Wasserströme erforderlichen Steuerelemente zusammengefaßt sind. Diese Steuerelemente werden mittels des Handgriffes 2 in geeigneter Weise bewegt. Zwei Zulaufrohre 8 für Kalt- bzw. Warmwasser erstrecken sich ebenfalls durch das Loch des Waschtisches von unten in den Armaturenkörper 1 hinein. Sie durchsetzen das Bodenteil 6 und kommunizieren in bekannter Weise mit der Steuerkartusche 7.

Das von der Steuerkartusche 7 je nach Relativstellung der Steuerelemente abgegebene Mischwasser gelangt über einen kurzen Zulaufkanal 9 in eine etwas vergrößerte Kammer 10 und von dort über einen Kanal 11, der den Zulaufkanal 9 koaxial fortsetzt, zum Auslaufrohr 5 und von dort zum ausziehbaren Auslauf-Mundstück 3.

Von der Seite her ist in die Kammer 10 ein Rohrunterbrecher eingeschoben, der insgesamt das Bezugszeichen 12 trägt. Er umfaßt ein hohlzylindrisches Gehäuse 13, das mittels O-Ringdichtungen gegen die Seitenwand der Kammer 10 im Bodenteil 6 sowie gegen die Innenwand des Armaturenkörpers 1 abgedichtet ist. Der Innenraum des hohlzylindrischen Gehäuses 13, der belüftungsweg 14, steht über eine Bohrung 15 mit der Außenatmosphäre in Verbindung.

Unter normalen Bedingungen, d.h., solange in dem mit den Zulaufrohren 8 verbundenen Leitungssystem kein Unterdruck herrscht, ist der Beluftungsweg 14 des Gehäuses 13 zum inneren Bereich der Kammer 10 hin durch eine Schließklappe 16 verschlossen. Diese ist in vergrößertem Maßstab in Figur 2a in der Seitenansicht und in der Figur 2B in der Unteransicht herausgezeichnet. Sie besteht aus elastischem Material, vorzugsweise Gummi oder einem vergleichbaren Kunststoff. Sie umfaßt einen an eine seitliche Nase 17 (vergl. Figur 2B) angeformten, im wesentlichen unter 90° abgebogenen Befestigungsabschnitt 18 sowie einen in der Unteransicht kreisförmigen Schließabschnitt 19. An der Übergangslinie zwischen dem Befestigungsabschnitt 18 und der seitlichen Nase 17 verläuft eine Hohlkehle 20, welche an dieser Stelle eine Art Scharnier zwischen den beiden Abschnitten 18 und 19 bildet.

Wie der Figur 1 zu entnehmen ist, ist der Befestigungsabschnitt 18 der Schließklappe 16 zwischen der Außenwand des Gehäuses 13 und der Innenwand der Kammer 10 verspannt, während der Schließabschnitt 19 der Schließklappe 16 um das durch die Hohlkehle 20 gebildete Scharnier zwischen der in ausgezogenen Strichen dargestellten Stellung und der strichpunktiert dargestellten Stellung verschwenken kann.

Die Funktionsweise des beschriebenen Rohrunterbrechers innerhalb der dargestellten Sanitärarmatur ist wie folgt:

Unter Normalbetrieb wird ein solcher Zustand der Sanitärarmatur verstanden, bei welchem in dem die Zulaufrohre 8 einschließenden Leitungssystem kein Unterdruck auftritt. Unter diesen Bedingungen liegt der Schließabschnitt 19 der Schließklappe 16 unter leichtem elastischem Druck an der in Figur 1 rechten Stirnseite des Gehäuses 13 an und verhindert hier sowohl den Eintritt von Luft aus der Außenatmosphäre in den inneren Bereich der Kammer 10 als auch den Ausfluß von Wasser aus dem inneren Bereich der Kammer 10 über die Belüftungsbohrung 15 im Armaturenkörper 1. Letzteres ist insbesondere dann wichtig, wenn die Schleife des Brausenschlauches 4 noch mit Wasser gefüllt ist, das Mundstück 3 ausgezogen und hochgehoben wird. Ohne die am Gehäuse 13 anliegende Schließklappe 16 würde das in der Schleife des Brausenschlauches 4 noch enthaltene Wasser aus der Belüftungsbohrung 15 ausfließen.

Tritt nunmehr in einem Ausnahmezustand in dem Leitungssystem, welches mit den Zulaufrohren 8 verbunden ist, ein Unterdruck auf, so verschwenkt der Schließabschnitt 19 der Schließklappe 16 um etwa 90°, bis er - wie in strichpunktierten Linien in Figur 1 dargestellt - den Kanal 9 versperrt. Hierdurch wird um einen verhindert, daß Wasser in die Steuerkartusche 7 und von dort aus evtl. sogar in die Zulaufrohre 8 und das angeschlossene Leitungssystem zurückströmen kann. Gleichzeitig wird der Zustrom von Luft über die Belüftungsbohrung 15 des Armaturengehäuses 1 und den Innenraum 14 des Gehäuses 13 in den in der Zeichnung rechten Bereich der Kammer 10 freigegeben, so daß also dieser Bereich der Kammer 10 sowie die nachgeschalteten Strömungswege (Auslaufrohr 5, Brauseschlauch 4, Auslauf-Mundstück 3) belüftet werden.

Sobald der Druck in den Wasser-Zulaufrohren 8 wieder auf seinen normalen Wert zurückkehrt, schwenkt der Schließabschnitt 19 der Schließklappe 16 aufgrund seiner Eigenelastizität wieder in seine Normalstellung zurück, die in Figur 1 mit ausgezogenen Strichen dargestellt ist.

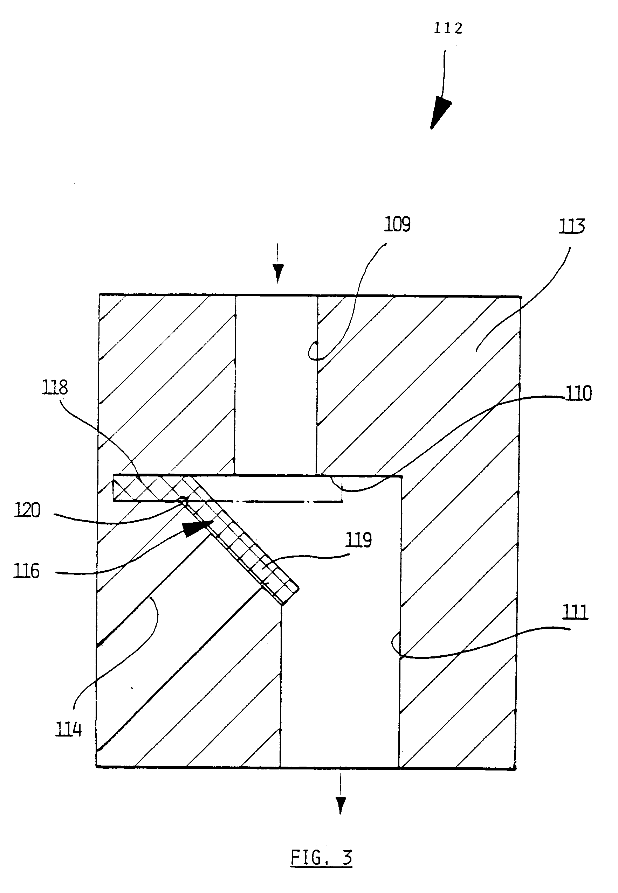

In Figur 3 ist ein zweites Ausführungsbeispiel eines Rohrunterbrechers dargestellt, dessen Aufbau weitgehend mit dem oben beschriebenen übereinstimmt. Entsprechende Bauelemente sind daher mit denselben Bezugszeichen zuzüglich 100 gekenneichnet.

Der in Figur 3 gezeigte Rohrunterbrecher 112 umfaßt ein Gehäuse 113, das unter Beifügung entsprechender Dichtungen in ähnlicher Weise in ein Bodenteil einer Sanitärarmatur eingefügt werden kann, wie dies beim Ausführungsbeispiel von Figur 1 der Fall war. Das Gehäuse 113 des Rohrunterbrechers von Figur 3 weist in diesem Falle einen Zulaufkanal 109 auf, dem das aus der Steuerkartusche austretende Mischwasser zugeführt wird. Der Zulaufkanal 109 mündet in eine innere Kammer 110 des Gehäuses 113, in welche außerdem achsparallel ein Kanal 111 und unter einem stumpfen Winkel zum Zulaufkanal 109 ein Belüftungskanal 114 einmünden.

Wiederum ist eine Schließklappe 116 vorgesehen, welche einen Befestigungsabschnitt 118 sowie einen Schließabschnitt 119 aufweist. Entsprechend der unterschiedlichen Geometrie der Kanäle 109, 114 im Gehäuses 113 schließen die Abschnitte 118 und 119 der Schließklappe 116 einen stumpfen Winkel miteinander ein. Wiederum findet sich an der ubergangslinie zwischen dem Befestigungsabschnitt 118 und dem Schließabschnitt 119 eine Hohlkehle 120, welche die Scharnierwirkung dieses Bereiches unterstützt.

Die Funktionsweise des in Figur 3 dargestellten Rohrunterbrechers stimmt mit derjenigen des Ausführungsbeispieles von Figur 1 vollständig überein, sieht man davon ab, daß der Schwenkbereich des Schließabschnittes 119 bei dem Ausführungsbeispiel von Figur 3 kleiner als beim Ausführungsbeispiel von Figur 1 ist.

Bei einem in der Zeichnung nicht dargestellten Ausführungsbeispiel ist der Schließabschnitt der Schließklappe aus hartem Material gefertigt. Er trägt beidseits elastische Auflages, die für die Abdichtung gegen die Mündungsöffnungen des Belüftungsweges und des Zulaufkanals sorgen. Alternativ zu diesen elastischen Auflagen können die Mündungsöffnungen auch von elastischen Dichtungen umgeben sein.

## Patentansprüche

1. Sanitärarmatur, in welche ein Rohrunterbrecher eingebaut ist, mit
    a) einem Armaturenkörper (1);
    b) einer Kammer (10; 110) innerhalb des Armaturenkörpers (1), in welche einmünden:
        ba) ein Zulaufkanal (9; 109) für Wasser;
        bb) ein Ablaufkanal (11; 111) für Wasser;
        bc) ein Belüftungsweg (14, 15; 114);
    c) einer Schließklappe (16; 116) in der Kammer (10; 110), welche bei Unterdruck im Zulaufkanal (9; 109) um einen bestimmten Winkel aus einer ersten Stellung, in welcher sie den Belüftungsweg (14; 114) verschließt, in eine zweite Stellung, in welcher sie den Zulaufkanal (9; 109) verschließt und den Belüftungsweg (14; 114) öffnet, verschwenkt,
    dadurch gekennzeichnet, daß
    d) die Schließklappe (19; 119) mittels eines einstückig an sie angeformten, elastischen Befestigungsabschnittes (18; 118) an dem Armaturenkörper (1) festgelegt ist;
    e) die Schließklappe (19; 119) um eine Übergangslinie zwischen ihr und dem Befestigungsabschnitt (18; 118) verschwenkbar ist;
    f) die Schließklappe (19; 119) ohne Unterdruck im Zulaufkanal (9; 109) elastisch federnd an der Mündungsöffnung des Belüftungsweges (14, 15; 114) in die Kammer (10; 110) anliegt.

2. Sanitärarmatur nach Anspruch 1, dadurch gekennzeichnet,

daß an der Übergangslinie zwischen dem Befestigungsabschnitt (18; 118) und dem verschwenkbaren Schließabschnitt (19; 119) der Schließklappe (16; 116) eine Hohlkehle (20; 120) vorgesehen ist.

3. Sanitärarmatur nach Anspruch 1 oder 2, dadurch gekennzeichnet,
daß der Schließabschnitt (19; 119) der Schließklappe (16; 116) aus einem harten Kern und beidseitigen elastischen Auflagen gefertigt ist.

4. Sanitärarmatur nach einem der Ansprüche 1 bis 3, dadurch gekennzeichnet, daß die Mündungsöffnungen des Belüftungsweges (14; 114) und des Zulaufkanals (9; 109) in die Kammer (10; 110) von elastischen Dichtungen umgeben sind.

## Claims

1. Sanitary fitting, in which an anti-syphoning valve is installed, with
    a) a fitting body (1);
    b) a chamber (10; 110) within the fitting body (1), into which open:
        ba) an inlet port (9; 109) for water;
        bb) an outlet port (11; 111) for water;
        bc) a ventilation path (14, 15; 114);
    c) a closing flap (16; 116) in the chamber (10; 110), which at the time of reduced pressure in the inlet port (9; 109) tilts by a certain angle from a first position, in which it closes the ventilation path (14; 114), into a second position, in which it closes the inlet port (9; 109) and opens the ventilation path (14; 114),
characterised in that
    d) the closing flap (19; 119) is fixed to the fitting body (1) by means of a resilient attachment section (18; 118) formed integrally thereon;
    e) the closing flap (19; 119) is able to tilt about a transition line between itself and the attachment section (18; 118);
    f) without reduced pressure in the inlet port (9; 109), the closing flap (19; 119) bears in an elastically resilient manner against the opening aperture of the ventilation path (14, 15; 114) into the chamber (10; 110).

2. Sanitary fitting according to Claim 1, characterised in that a groove (20; 120) is provided at the transition line between the attachment section (18; 118) and the tiltable closing section (19; 119) of the closing flap (16; 116).

3. Sanitary fitting according to Claim 1 or 2, characterised in that the closing section (19; 119) of the closing flap (16; 116) is made from a hard core and resilient overlays on both sides.

4. Sanitary fitting according to one of Claims 1 to 3, characterised in that the openings of the ventilation path (14; 114) and of the inlet port (9; 109) into the chamber (10; 110) are surrounded by resilient gaskets.

## Revendications

1. Armature sanitaire dans laquelle est incorporé un interrupteur de tuyaux avec
    a) un corps d'armature (1);
    b) une chambre (10, 110° dans le corps d'armature (1), dans laquelle débouchent:
        ba) un canal d'adduction (9, 109) pour l'eau;
        bb) un canal d'évacuation (11, 111) pour l'eau;
        bc) un passage de mise à l'air (14, 15, 114);
    c) un clapet de fermeture (16, 116) dans la chambre (10, 110) qui tourne suivant un angle déterminé depuis une première position dans laquelle il ferme le passage de mise à l'air (14, 114) jusqu'à une deuxième position dans laquelle il ferme le canal d'adduction (9, 109) et ouvre le passage de mise à l'air (14, 114),
caractérisé en ce que
    d) le clapet de fermeture (19, 119) est fixé au moyen d'une section de fixation (18, 118) élastique formée d'une pièce sur le corps d'armature (1);
    e) le clapet de fermeture (19, 119) peut tourner autour d'une ligne de transition entre celui-ci et la section de fixation (18, 118);
    f) le clapet de fermeture (19, 119) appuie, en l'absence de dépression dans le canal d'adduction (9, 109), de manière élastique sur l'orifice de l'embouchure du passage de mise à l'air (14, 15, 114) dans la chambre (10, 110).

2. Armature sanitaire selon la revendication 1, caractérisée en ce qu'une gorge creuse (20, 120) est prévue à la ligne de transition entre la section de fixation (18, 118) et la section de fermeture pivotante (19, 119) du clapet de fermeture (16, 116).

3. Armature sanitaire selon la revendication 1 ou 2, caractérisée en ce que la section de fermeture (19, 119) du clapet de fermeture (16, 116) est réalisée avec un noyau dur et des revêtements élastiques de part et d'autre.

4. Armature sanitaire selon l'une des revendications 1 à 3, caractérisée en ce que les orifices de l'embouchure du trajet de mise à l'air (14, 114) et du canal d'adduction (9, 109) dans la chambre (10, 110) sont entourés par des joints élastiques.

FIG. 1

FIG. 2A

FIG. 2B

112

109    113

118

110

120

116    119

111

114

FIG. 3